(19) Europäisches Patentamt / European Patent Office / Office européen des brevets

(11) **EP 1 562 424 B1**

(12) **EUROPÄISCHE PATENTSCHRIFT**

(45) Veröffentlichungstag und Bekanntmachung des Hinweises auf die Patenterteilung:
**04.03.2009 Patentblatt 2009/10**

(21) Anmeldenummer: **03775233.4**

(22) Anmeldetag: **25.10.2003**

(51) Int Cl.:
***A01N 43/80*** *(2006.01)*

(86) Internationale Anmeldenummer:
**PCT/EP2003/011885**

(87) Internationale Veröffentlichungsnummer:
**WO 2004/040979 (21.05.2004 Gazette 2004/21)**

(54) **BENZYLHEMIFORMAL ENTHALTENDE MIKROBIZIDE MITTEL**

MICROBICIDE SUBSTANCES CONTAINING BENZYLHEMIFORMAL

SUBSTANCES MICROBICIDES CONTENANT DU BENZYLHEMIFORMAL

(84) Benannte Vertragsstaaten:
**AT BE BG CH CY CZ DE DK EE ES FI FR GB GR HU IE IT LI LU MC NL PT RO SE SI SK TR**

(30) Priorität: **08.11.2002 DE 10251916**

(43) Veröffentlichungstag der Anmeldung:
**17.08.2005 Patentblatt 2005/33**

(73) Patentinhaber: **LANXESS Deutschland GmbH
51369 Leverkusen (DE)**

(72) Erfinder:
• **WACHTLER, Peter
47800 Krefeld (DE)**
• **KUGLER, Martin
42799 Leichlingen (DE)**

(56) Entgegenhaltungen:
EP-A- 1 161 867          EP-A- 1 245 153
DE-A- 4 316 845          US-A- 6 133 300

**Beschreibung**

Gegenstand der vorliegenden Anmeldung sind neue Mischungen enthaltend 1,2-Benzisothiazolinon (BIT) und Benzylhemiformal (BHF), Verfahren zu deren Herstellung und deren Verwendung zum Schutz von technischen Materialien vor Befall und Zerstörung durch Mikroorganismen sowie mikrobizide Mittel auf Basis dieser neuen Mischungen.

1,2-Benzisothiazolinon (BIT) bzw. dessen Natrium-, Kalium- oder Lithiumsalze sind seit langem in der Praxis verwendete Wirkstoffe zur Herstellung mikrobizid wirksamer Formulierungen. Dieser Wirkstoff zeichnet sich durch eine gute chemische und thermische Stabilität aus und verfügt darüber hinaus grundsätzlich über eine breite antimikrobielle Wirkung (Bakterien, Pilze, Hefen). Allerdings ist die Wirkhöhe gegen bestimmte Bakterienarten nicht immer zufriedenstellend und die beobachtete Wirkgeschwindigkeit in manchen Fällen nicht hoch genug.

Benzylhemiformal (BHF, kommerzielle Bezeichnung z.B. Preventol® D2) ist ein Biozidwirkstoff auf Basis eines Formaldehydabspalters und ist, wie aus der Literatur bekannt, bereits für die verschiedensten Anwendungen (Kühlschmierstoffe, Kosmetika, Anstrichmittel, Betonadditive etc.) verwendet worden. Benzylhemiformal, (BHF) verfügt über die für einen Formaldehydabspalter typischen günstigen Eigenschaften wie gute bakterizide Wirksamkeit, schnellen Wirkeintritt oder Gasphasenaktivität. Allerdings sind zur Erzielung zufriedenstellender Ergebnisse in manchen Fällen Dosiermengen notwendig, die im Sinne einer sicheren und ökonomischen Verwendung verbesserungswürdig erscheinen.

DE-A1-4316845 schlägt Mischungen aus BHF und Isothiazolinonderivaten für den Materialschutz, z.B. von wässrigen funktionellen Flüssigkeiten, vor. Bevorzugtes und einziges spezifisch genanntes Isothiazolinonderivat ist das N-Octyl-Isothiazolinonderivat.

EP-A1-1161867 offenbart Mischungen von BIT mit einem Formaldehyd-Addukt. BHF wird unter den Formaldehyd-Addukten nicht erwähnt.

EP-A2-1245153 offenbart Mischungen aus Tetramethylolacetylendiharnstoff und zwei oder mehr Isothiazolinonen, darunter N-Octyl-isothiazolinon und BIT.

US 6133300 offenbart Mischungen von BIT und Bis-(hydroxymethyl)-5,5-dimethylhydantoin.

Überraschenderweise wurden nun neue Mischungen auf Basis von 1,2-Benzisothiazolinon (BIT) und Benzylhemiformal (BHF) gefunden, die die Nachteile der jeweiligen Einzelkomponenten in vorteilhafter Weise überwinden und somit zu einer Verbesserung des Standes der Technik beitragen.

Die vorliegende Erfindung betrifft daher Mischungen, die dadurch gekennzeichnet sind, dass sie 1,2-Benzisothiazolinon (BIT) und/oder dessen Natrium-, Kalium- oder Lithiumsalze und Benzylhemiformal (BHF) als wirksame Komponenten enthalten.

Die erfindungsgemäßen Mischungen weisen eine starke Wirkung gegen Mikroorganismen auf und können zum Schutz von technischen Materialien gegen Befall und Zerstörung durch Mikroorganismen eingesetzt werden.

Darüber hinaus zeichnen sich die erfindungsgemäßen Mischungen überraschend dadurch aus, dass sie in spezifischen Mischungsverhältnissen eine synergistische Wirkungssteigerung aufweisen. Daraus folgt, dass die zum Schutz technischer Produkte im Falle der erfindungsgemäßen Mischungen benötigten Konzentrationen, verglichen mit den nötigen Konzentrationen im Falle der jeweiligen Einzelwirkstoffe, herabgesetzt werden können. Dies ist unter ökonomischen, ökologischen und anwendungstechnischen Gesichtspunkten ausgesprochen vorteilhaft und stellt einen Beitrag zur Erhöhung der Konservierungsqualität dar.

Bevorzugt können mit den erfindungsgemäßen Wirkstoffmischungen funktionelle Flüssigkeiten und wasserhaltige technische Produkte, die anfällig sind gegen den Befall durch Mikroorganismen, konserviert werden.

Beispielhaft, jedoch ohne zu limitieren seien die Anwendungen für folgende technische Materialien und Produkte genannt:

- Anstrichmittel, Farben , Putze und sonstige Beschichtungsmittel
- Stärke-lösungen, oder -slurrys oder andere auf Basis von Stärke hergestellte Produkte wie z.B. Druckverdicker
- Slurrys anderer Rohstoffe wie Farbpigmente (z.B. Eisenoxidpigmente, Rußpigmente, Titandioxidpigmente) oder Slurrys von Füllstoffen und Streichpigmenten wie Kaolin, Calciumcarbonat oder Talkum
- Bauchemische Produkte wie Betonadditive beispielsweise auf Basis von Melasse, Ligninsulfonaten oder Polyacrylaten, Bitumenemulsionen oder Fugendichtungsmassen
- Leime und Klebstoffe auf Basis der bekannten tierischen, pflanzlichen oder synthetischen Rohstoffe
- Polymerdispersionen auf Basis von z.B. Polyacrylat, Styrolacrylat, Styrolbutadien, Polyvinylacetat u.a.
- Detergentien und Reinigungsmittel für den technischen und Haushaltsbedarf
- Mineralöle oder Mineralölprodukte (wie z.B. Dieselkraftstoffe)
- Kühlschmierstoffe zur Metallverarbeitung auf Basis von Mineralöl-haltigen, halbsynthetischen oder synthetischen Konzentraten.
- Hilfsmittel für die Leder-,Textil- oder fotochemische Industrie
- Vor- und Zwischenprodukte der chemischen Industrie, z.B bei der Farbstoffproduktion und -lagerung.

- Tinten oder Tuschen
- Wachs- und Tonemulsionen

Die erfindungsgemäßen Mischungen können zusätzlich einen oder mehrere weitere biozide Wirkstoffe enthalten. Als Mischungspartner seien die Verbindungen
Bronopol
p-Chlor-m-kresol
N-Methylolharnstoff
Dimethylolharnstoff
4,5-Dichlor-2-n-octylisothiazolin-3-on
Ethylenglykolhemiformal
Ethylenglykol-bis-hemiformal
1,2-Dibrom-2,4-dicyanobutan
2,2-Dibrom-3-nitrilopropionsäureamid
2-n-Octylisothiazolin-3-on
Iodpropargylbutylcarbamat
2- Phenoxyethanol
o-Phenyl-phenol
Quatäre Ammoniumsalze, wie z.B. N-Alkyl-N,N-dimethyl-benzyl-ammoniumchlorid
Tetramethylolacetylendihamstoff
Trimethylen-2-methylisothiazolinon-3-on
und gegebenenfalls weitere Stoffe genannt

Die Mengen an 1,2- Benzisothiazolinon (BIT) und/oder dessen Natrium-, Kalium- oder Lithiumsalz und Benzylhemiformal (BHF) in den erfindungsgemäßen Mischungen können über einen weiten Bereich variieren. In solchen Mischungen mit breiter antimikrobieller Wirkung, die zum Schutz funktioneller Flüssigkeiten und wasserhaltiger technischer Produkte dienen, liegt das Verhältnis von 1,2-Benzisothiazolinon (BIT) zu Benzylhemiformal (BHF) im Allgemeinen im Gewichtsverhältnis von 9 : 1 bis 1 : 9, bevorzugt 5 : 1 bis 1: 5, besonders bevorzugt 4 : 1 bis 1 : 4.

Die erfindungsgemäßen Mischungen können im Materialschutz zum Schutz technischer Materialien gegen Befall und Zerstörung durch unerwünschte Mikroorganismen eingesetzt werden. Insbesondere eignen sie sich zum Schutz von wässrigen funktionellen Flüssigkeiten. Sie sind besonders wirksam gegen Bakterien, Schimmelpilze, Hefen sowie gegen Schleimorganismen. Beispielhaft, jedoch ohne zu limitieren, seien die folgenden Mikroorganismen genannt:

Altemaria wie Alternaria tenuis, Aspergillus wie Aspergillus niger, Chaetomium wie Chaetomium globosum, Fusarium wie Fusarium solani, Lentinus wie Lentinus tigrinus, Penicillium wie Penicillium glaucum;
Alcaligenes wie Alcaligenes faecalis, Bacillus wie Bacillus subtilis, Escherichia wie Escherichia coli, Pseudomonas wie Pseudomonas aeruginosa oder Pseudomonas fluorescens, Staphylococcus wie Staphylococcus aureus;
Candida wie Candida albicans, Geotrichum wie Geotrichum candidum;

Die erfindungsgemäßen Mischungen können hergestellt werden, indem man die Einzelkomponenten, gegebenenfalls unter Zugabe eines oder mehrerer Lösungsmittel und gegebenenfalls weiterer antimikrobiell wirksamer Verbindungen vermischt.

Die Applikation der erfindungsgemäßen Mischungen kann, in Abhängigkeit von ihren jeweiligen physikalischen und/oder chemischen Eigenschaften, entweder separat in Form einer Zudosierung der Einzelwirkstoffe erfolgen, wobei je nach vorliegendem Konservierungsproblem eine individuelle Einstellung des Konzentrationsverhältnisses vorgenommen werden kann, oder es kann eine Zudosierung der fertigen Mischung erfolgen. Dabei ist es auch möglich, die erfindungsgemäße Mischung zuvor in eine übliche Formulierung wie z.B. Lösungen, Emulsionen, Suspensionen, Pulver, Schäume, Pasten, Granulate, Aerosole und Feinstverkapselungen in polymeren Stoffen, zu überführen.

Diese Formulierungen werden in an sich bekannter Weise hergestellt, z.B. durch Vermischen der erfindungsgemäßen Mischung oder der darin enthaltenen Einzelwirkstoffe mit Streckmitteln, also flüssigen Lösungsmitteln unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser; Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quartz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängel; als Emulgier- und/oder schaumerzeugende Mittel kommen in Frage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen z.B. Ligninsulfitablaugen in Frage.

Es können in den Formulierungen Haftmittel und Verdicker wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Gegenstand der vorliegenden Erfindung sind weiterhin mikrobizide Mittel auf Basis der erfindungsgemäßen Wirkstoffmischungen, enthaltend mindestens ein Lösungs- oder Verdünnungsmittel sowie gegebenenfalls Verarbeitungshilfsmittel und gegebenenfalls weitere antimikrobiell wirksame Stoffe.

Die zum Schutz von technischen Materialien zu verwendenden mikrobiziden Mittel oder formulierten Konzentrate enthalten die Wirkstoffe 1,2-Benzisothiazolinon (BIT) und/oder dessen Natrium-, Kalium- oder Lithiumsalz und Benzylhemiformal (BHF), gerechnet als Summe beider Wirkstoffe, in einer Konzentration von 5 bis 80 Gew.-%, vorzugsweise 10 bis 60 Gew.-%.

Die Anwendungskonzentrationen der erfindungsgemäß zu verwendenden Wirkstoffkombinationen richtet sich nach der Art und dem Vorkommen der zu bekämpfenden Mikroorganismen, der mikrobiellen Ausgangsbelastung sowie nach der Zusammensetzung des zu schützenden Materials. Die optimale Einsatzmenge kann durch Testreihen ermittelt werden. Im allgemeinen liegen die Anwendungskonzentrationen im Bereich von 0,01 bis 5 Gew.-%, vorzugsweise von 0,05 bis 1,0 Gew.-% der erfindungsgemäßen Mischung, bezogen auf das zu schützende Material.

Gegen bestimmte, insbesondere praxisrelevante Keime wie z.B. Pseudomonas fluorescens (siehe Beispiel), zeichnen sich die erfindungsgemäßen Mischungen durch synergistische Effekte aus, d.h. die Wirksamkeit der Mischung ist größer als dies aus der Wirksamkeit der Einzelkomponenten abzuleiten wärme.

Der gefundene Synergismus der erfindungsgemäßen Mischungen lässt sich über folgenden mathematischen Ansatz ermitteln (vgl. F.C. Kull, P.C. Elisman, H.D. Sylwestrowicz and P.K. Mayer, Appl. Microbiol. 9, 538 (1961):

$$\text{synergistischer Index (SI)} = \frac{Qa}{QA} + \frac{Qb}{QB}$$

mit

$Q_a$ =   Menge Komponente A in der Wirkstoffmischung, die den gewünsch- ten Effekt, d.h. kein mikrobielles Wachstum, erzielt,

$Q_A$ =   Menge Komponente A, die allein eingesetzt, das Wachstum der Mikroorganismen unterdrückt,

$Q_b$ =   Menge Komponente B in der Wirkstoffmischung, die das Wachstum der Mikroorganismen unterdrückt, und

$Q_B$ =   Menge Komponente B, die allein eingesetzt, das Wachstum der Mi- kroorganismen unterdrückt.

Ein synergistischer Index von SI <1 zeigt für die Wirkstoffmischung einen synergistischen Effekt an.

Beispielhaft, ohne zu limitieren, wird anhand der nachfolgenden Berechnungen die synergistische Wirkungsverstärkung dokumentiert.

**Beispiel**

Synergismus BIT / BHF

Testkeim: Pseudomonas fluorescens

Die Angaben in Klammern sind die Gewichtsverhältnisse der Wirkstoffe.

$$\text{synergistischer Index (SI)} = \frac{Qa}{QA} + \frac{Qb}{QB}$$

$$A = BIT \ / \ B = BHF$$

|  | Pseudomonas fluorescens | SI |
|---|---|---|
| Mengenanteile der reinen Wirkstoffe, die das Wachstum unterdrücken (ppm) | | |
| A = BIT | 5 | -- |
| B = BHF | 100 | -- |
| Mengenanteile in den Wirkstoffmischungen, die das Wachstum unterdrücken (ppm) | | |
| BIT / BHF (9:1) | 4,5 / 0,5 | 0,905 |
| BIT / BHF (8:2) | 4 / 1,0 | 0,81 |
| BIT / BHF (7:3) | 3,5 / 1,5 | 0,72 |
| BIT / BHF (6:4) | 4,5 / 3,0 | 0,93 |
| BIT / BHF (5:5) | 5 / 5,0 | 1,05 |
| BIT / BHF (4:6) | 4 / 6,0 | 0,86 |
| BIT / BHF (3:7) | 3 / 7,0 | 0,67 |
| BIT / BHF (2:8) | 4 / 16 | 0,96 |
| BIT / BHF (1:9) | 5 / 45 | 1,45 |

Die erfindungsgemäßen Kombinationen weisen in bestimmten Konzentrationsverhältnissen eine synergistische Wirkung auf.

**Patentansprüche**

1. Mischung biozider Wirkstoffe, **dadurch gekennzeichnet, dass** sie Benzylhemiformal (BHF) und 1,2 Benzisothiazolinon (BIT) und/oder dessen Natrium-, Kalium- oder Lithiumsalz enthält.

2. Mischung gemäß Anspruch 1, **dadurch gekennzeichnet, dass** das Gewichtsverhältnis von 1,2-Benzisothiazolinon (BIT) und/oder dessen Natrium-, Kalium- oder Lithiumsalz zu Benzylhemiformal (BHF) 9 : 1 bis 1 : 9 beträgt.

3. Mikrobizides Mittel enthaltend eine Wirkstoffmischung gemäß wenigstens einem der Anspruche 1 und 2 und mindestens ein Hilfsmittel aus der Reihe der Lösungsmittel oder Lösungsmittelgemische, Streckmittel, oberflächenaktiven Verbindungen und gegebenenfalls weitere antimikrobiell wirksame Verbindungen.

4. Verwendung einer Mischung gemäß wenigstens einem der Ansprüche 1 und 2 zum Schutz von technischen Materialien vor Befall und/oder Zerstörung durch Mikroorganismen.

5. Verwendung gemäß Anspruch 4, **dadurch gekennzeichnet, dass** es sich bei den technischen Materialien um wasserhaltige technische Produkte und wasserhaltige funktionelle Flüssigkeiten handelt.

6. Verfahren zum Schutz von technischen Materialien vor Befall und/oder Zerstörung durch Mikroorganismen, **dadurch gekennzeichnet, dass** man die technischen Materialien mit einer Mischung gemäß wenigstens einem der Ansprüche 1 und 2 versetzt oder behandelt.

**7.** Verfahren zur Herstellung einer Mischung gemäß wenigstens einem der Ansprüche 1 und 2, **dadurch gekennzeichnet, dass** man die Einzelkomponenten gegebenenfalls unter Zugabe von Lösungsmitteln oder Lösungsmittelgemischen, Streckmitteln, oberflächenaktiven Mitteln und weiteren antimikrobiell wirksamen Verbindungen vermischt.

**8.** Technische Materialien enthaltend eine Wirkstoffmischung gemäß wenigstens einem der Ansprüche 1 und 2.

**Claims**

**1.** Mixture of biocidally active compounds, **characterized in that** it comprises benzyl hemiformal (BHF) and 1,2-benzisothiazolinone (BIT) and/or its sodium, potassium or lithium salt.

**2.** Mixture according to claim 1, **characterized in that** the weight ratio of 1,2-benzisothiazolinone (BIT) and/or its sodium, potassium or lithium salt to benzyl hemiformal (BHF) is from 9:1 to 1:9.

**3.** Microbiocidal composition, comprising an active compound mixture according to at least one of claims 1 and 2 and at least one auxiliary from the group of the solvents or solvent mixtures, extenders, surfactants and, if appropriate, further antimicrobially active compounds.

**4.** Use of a mixture according to at least one of claims 1 and 2 for protecting industrial materials against attack and/or destruction by microorganisms.

**5.** Use according to claim 4, **characterized in that** the industrial materials are aqueous industrial products and aqueous functional fluids.

**6.** Method for protecting industrial materials against attack and/or destruction by microorganisms, **characterized in that** the industrial materials are treated or admixed with a mixture according to at least one of claims 1 and 2.

**7.** Process for preparing a mixture according to at least one of claims 1 and 2, **characterized in that** the individual components are mixed, if appropriate with addition of solvents or solvent mixtures, extenders, surfactants and further antimicrobially active compounds.

**8.** Industrial materials comprising an active compound mixture according to at least one of claims 1 and 2.

**Revendications**

**1.** Mélange de substances actives biocides, **caractérisé en ce qu'**il contient du benzylhémiformal (BHF) et de la 1,2 benzo-isothiazolinone (BIT) et/ou son sel de sodium, de potassium ou de lithium.

**2.** Mélange selon la revendication 1, **caractérisé en ce que** le rapport pondéral de 1,2-benzo-isothiazolinone (BIT) et/ou de son sel de sodium, de potassium ou de lithium à benzylhémiformal (BHF) est de 9:1 à 1:9.

**3.** Agent microbiocide contenant un mélange de substances actives selon au moins l'une quelconque des revendications 1 et 2 et au moins un adjuvant de la série des solvants ou des mélanges de solvants, des diluants, des composés tensioactifs et le cas échéant d'autres composés actifs antimicrobiens.

**4.** Utilisation d'un mélange selon au moins l'une quelconque des revendications 1 et 2 pour la protection de matériaux techniques contre l'attaque et/ou la dégradation par des microorganismes.

**5.** Utilisation selon la revendication 4, **caractérisée en ce qu'**il s'agit, pour les matériaux techniques, de produits techniques aqueux et de liquides fonctionnels aqueux.

**6.** Procédé pour la protection de matériaux techniques contre l'attaque et/ou la dégradation par des microorganismes, **caractérisé en ce qu'**on mélange ou traite les matériaux techniques avec un mélange selon au moins l'une quelconque des revendications 1 et 2.

7. Procédé pour la préparation d'un mélange selon au moins l'une quelconque des revendications 1 et 2, **caractérisé en ce qu'**on mélange les différents composants, le cas échéant avec addition de solvants ou de mélanges de solvants, de diluants, d'agents tensioactifs et d'autres composés actifs antimicrobiens.

8. Matériaux techniques contenant un mélange de substances actives selon au moins l'une quelconque des revendications 1 et 2.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4316845 A1
- EP 1161867 A1
- EP 1245153 A2
- US 6133300 A